# EUROPÄISCHE PATENTSCHRIFT

(11) **EP 0 555 758 B1**
(45) Veröffentlichungstag und Bekanntmachung des Hinweises auf die Patenterteilung: **13.12.1995**
(21) Anmeldenummer: 93101677.8
(22) Anmeldetag: 04.02.1993
(51) Int. Cl.: G01N 30/60, B01D 15/08

(54) **Chromatographiesäule**
Chromatography column
Colonne de chromatographie

(30) Priorität: 14.02.1992 DE 9201885 U
(43) Veröffentlichungstag der Anmeldung: 18.08.1993
(73) Patentinhaber: MACHEREY, NAGEL & CO., D-52355 Düren (DE)
(72) Erfinder: Radmacher, Edmund, Dr., W-5160 Düren (DE)
(74) Vertreter: Paul, Dieter-Alfred, Dipl.-Ing.

(56) Entgegenhaltungen:
- EP-A- 0 205 002
- US-A- 4 636 316
- US-A- 4 655 917

## Beschreibung

Die Erfindung betrifft eine Chromatographiesäule mit einer Trennsäule, die an wenigstens einer Seite mit einer Endverschraubung zum Anschluß eines Kapillarrohres, einer Vorsäule oder einer weiteren Trennsäule versehen ist, wobei die Endverschraubung eine das Säulenrohr umgebende Stützmutter und eine Kupplungsmutter aufweist, und sich die Stützmutter zum zugehörigen Ende der Trennsäule hin an einem Anschlagstück abstützt, welches in einer Ausnehmung in der Trennsäule gehalten ist.

Eine solche Chromatographiesäule wird von der WATERS Chromatography Division der Millipore Corporation vertrieben. Deren Trennsäule weist endseitig eine Ringnut auf, in die ein C-förmiger Klipp als Anschlagstück einschiebbar ist, wobei der Klipp so geformt ist, daß er dabei eine Einschnappbewegung ausführt. Dieser Klipp dient als Anschlag für eine als Hutmutter ausgebildete Stützmutter, die vor dem Einschieben des Klipps auf die Trennsäule aufgeschoben ist.

Für die Verbindung der Trennsäule mit einem Kapillarrohr gehört zu der Endverschraubung eine Kupplungsmutter, die ein Außengewinde aufweist und mit diesem Gewinde in das Innengewinde der Stützmutter einschraubbar ist. Die Kupplungsmutter ist ebenfalls hutförmig ausgebildet und kann auf diese Weise ein Druckstück auf das Ende der Trennsäule aufpressen, wobei in das Druckstück das Ende eines Kapillarrohrs eingeschraubt werden kann. Damit die Verbindung möglichst dicht und totvolumenarm ist, weist die Trennsäule endseitig eingesetzte Fritten- und Dichtelemente auf.

Eine von der vorbeschriebenen Chromatographiesäule abweichende Lösung zeigt die EP-A- 0̸ 20̸5 0̸0̸2. Die darin offenbarte Chromatographiesäule hat ebenfalls eine Trennsäule mit endseitig vorgesehener Ringnut, wobei die Endverschraubung gleichfalls aus einer Stützmutter und einer Kupplungsmutter besteht. Die Stützmutter ist hier jedoch axial in zwei Hälften geteilt und hat endseitig einen nach innen vorspringenden Ringsteg, der in die Ringnut einfaßt. Auf diese Weise wird die Stützmutter axial fixiert, wenn die Kupplungsmutter auf sie aufgeschraubt wird.

Bei beiden vorbekannten Chromatographiesäulen besteht der Nachteil, daß dann, wenn statt beispielsweise eines Kapillarrohres eine Vorsäule oder eine weitere Trennsäule angeschlossen werden soll, verschiedene Sätze von Endverschraubungen vorhanden sein müssen, damit ein solcher Anschluß verwirklicht werden kann. Der Erfindung liegt deshalb die Aufgabe zugrunde, eine Chromatographiesäule mit einer Endverschraubung der eingangs genannten Art zu schaffen, die mit einer möglichst geringen Anzahl von Teilen den Anschluß von Kapillarrohren und Vorsäulen sogar unterschiedlicher Länge sowie von weiteren Trennsäulen zuläßt.

Diese Aufgabe wird erfindungsgemäß dadurch gelöst, daß die Trennsäule wenigstens an einem Ende mehrere, axial hintereinander angeordnete Ausnehmungen jeweils für die Aufnahme des Anschlagstückes aufweist. Diese Ausbildung läßt es zu, daß das Anschlagstück in unterschiedlichem Abstand zum stirnseitigen Ende der Trennsäule an dieser angebracht werden kann, so daß die Stützmutter in entsprechend unterschiedlichen Stellungen in Bezug auf die Trennsäule abgestützt wird. Dabei sind die Abstände der Ausnehmungen zum stirnseitigen Ende der Trennsäule so bemessen, daß mit einer einzigen Kupplungsmutter statt eines Kapillarrohres eine Vorsäule und/oder verschiedene Längen von Vorsäulen angeschlossen werden können. Die Anzahl der Ausnehmungen ist dabei an die Anzahl der verschiedenen Kupplungsmöglichkeiten angepaßt. Im einfachsten Fall reichen zwei Ausnehmungen. Es besteht jedoch auch die Möglichkeit, drei oder sogar mehr Ausnehmungen vorzusehen, um verschiedene Arten von Vorsäulen anschließen zu können.

In Ausbildung der Erfindung ist vorgesehen, daß das Anschlagstück in an sich bekannter Weise als C-förmiger Klipp ausgebildet ist. Dabei sollten der Klipp und die Ausnehmungen derart aneinander angepaßt sein, daß der Klipp beim Einsetzen in eine der Ausnehmungen eine Einschnappbewegung ausführt, also nicht wieder von selbst aus der Ausnehnung herausfallen kann.

Die Ausnehmungen sind ebenfalls in an sich bekannter Weise als Ringnuten ausgebildet. Es sind zwar auch andere Arten von Ausnehmungen denkbar, jedoch hat sich die Ringnut als eine Zweckmäßige Ausführungsform herausgestellt.

Die Kupplungsmutter ist vorzugsweise als Hutmutter ausgebildet, um auf diese Weise das anzuschließende Kapillarrohr bzw. die Vorsäule an das stirnseitige Ende der Trennsäule anpressen zu können. Es besteht jedoch auch die Möglichkeit, die Kupplungsmutter als Kupplungshülse zur Verbindung zweier Trennsäulen mit gegeneinander gerichteten Stützmuttern auszubilden, so daß sich auf diese Weise die Möglichkeit ergibt, unterschiedlich lange Trennsäulen zu verwirklichen.

Nach einem weiteren Merkmal der Erfindung ist vorgesehen, daß auf das offene Ende der Trennsäule ein totvolumenarmes Zwischenstück aufgesetzt ist, das beidseitig Vorsprünge zum Einfassen in die Trennsäule und in ein anschließendes Element, beispielsweise eine Vorsäule oder eine weitere Trennsäule, aufweist. Dabei sollten die Vorsprünge kegelstumpfförmig ausgebildet sein, damit eine gute Abdichtung herstellbar ist.

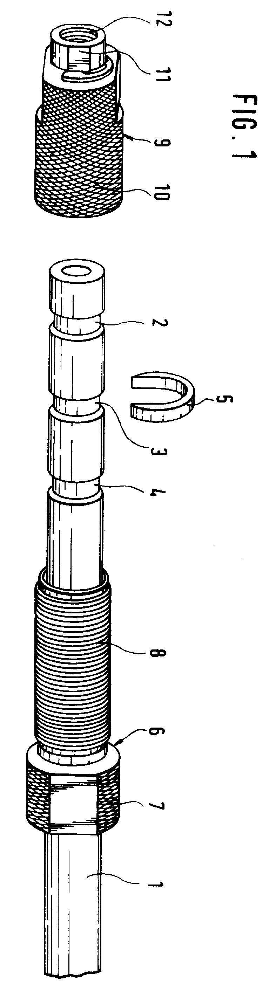

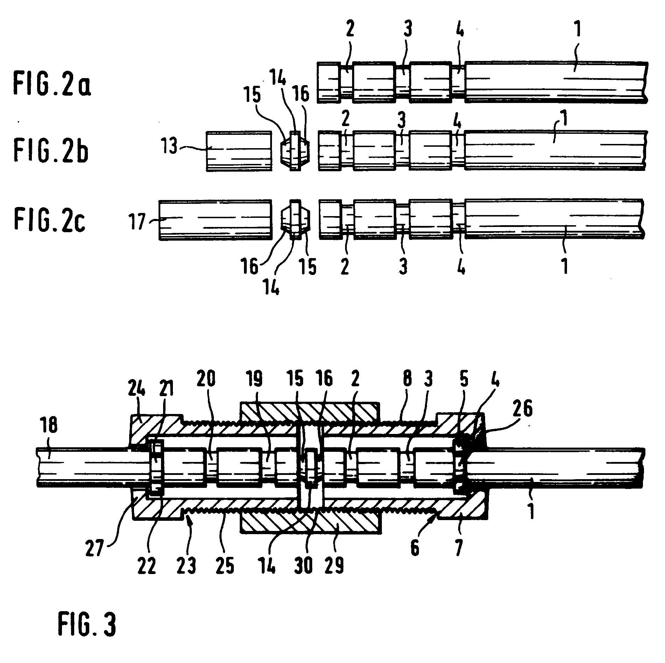

In der Zeichnung ist die Erfindung anhand von Ausführungsbeispielen näher veranschaulicht. Es zeigen:
- Figur (1): die Ansicht des Endes einer Trennsäule mit Endverschraubung;
- Figur (2 a, b, c): die Seitenansicht des Endes einer Trennsäule ohne Vorsäule (a), mit einer kleinen Vorsäule (b) und mit einer längeren Vorsäule (c);
- Figur (3): einen Längsschnitt durch die Endverschraubung für die Verbindung von zwei Trennsäulen.

In Figur (1) ist der Endbereich einer Trennsäule (1) zu sehen, die Teil einer Chromatographiesäule ist. Die Trennsäule (1) ist mit einem Sorbens versehen und wird endseitig durch ein hier nicht näher dargestelltes Frittenelement und eine Dichtung abgeschlossen. Die Trennsäule (1) weist zum freien Ende hin zwei Ringnuten (2, 3, 4) auf, die axialen Abstand zueinander haben. In diese Ringnuten kann ein C-förmiger Klipp (5) von der Seite her, also in radialer Richtung, eingeschoben werden. Die Öffnung des Klipps (5) ist dabei so dimensioniert, daß die Öffnung beim Einschieben zunächst etwas aufgeweitet wird und anschließend wieder etwas zuschnappt, so daß der Klipp (5) in seiner Endstellung unverlierbar gehalten wird. Der Klipp (5) hat eine solche Dicke, daß er in seiner Endstellung über den Außenmantel der Trennsäule (1) vorsteht.

Auf die Trennsäule (1) ist eine als Hutmutter ausgebildete Stützmutter (6) aufgeschoben. Sie weist ein Griffteil (7) sowie ein von diesem zum Ende der Trennsäule (1) hin vorstehenden Außengewindeteil (8) auf. Der Innendurchmesser der Stützmutter (6) ist so bemessen, daß die Stützmutter (6) über den Klipp (5) geschoben werden kann, bis die Stützmutter (6) mit einem nach innen vorspringenden Ringsteg gegen den Klipp (5) an dessen zum Ende der Trennsäule (1) abgewandten Seite zur Anlage kommt. Der Klipp (5) verhindert dann eine weitere Bewegung der Stützmutter (6) in Richtung auf das gezeigte Ende der Trennsäule (1) und legt sie insoweit fest.

In axialer Verlängerung der Trennsäule (1) ist eine Kupplungsmutter (9) dargestellt, die ebenfalls hutförmig ausgebildet ist und ein Griffteil (10̸) hat. Sie ist zur Trennsäule (1) hin offen ausgebildet und hat ein hier nicht näher dargestelltes Innengewinde, mit dem die Kupplungsmutter (9) auf das Außengewindeteil (8) der Stützmutter (6) aufgeschraubt werden kann. In die Kupplungsmutter (9) ist ein Druckstück (11) eingesetzt, welches sich an einem hier nicht näher dargestellten, innenseitig vorstehenden Ringsteg der Kupplungsmutter (9) abstützt, so daß das Druckstück (11) nur an der auf das Ende der Trennsäule (1) gerichteten Seite hin aus der Kupplungsmutter (9) herausgenommen werden kann. Das Druckstück (11) wird beim Aufschrauben der Kupplungsmutter (9) auf das Außengewindeteil (8) der Stützmutter (6) stirnseitig gegen das Ende der Trennsäule (1) aufgepreßt. Hier nicht näher gezeigte Dichtelemente sorgen für eine Abdichtung der Verbindung auch bei sehr hohen Drücken.

Das Druckstück (11) weist ein Durchgangsloch (12) auf, das mit einem Innengewinde versehen ist, in das das Ende eines Kapillarrohrs abdichtend eingeschraubt werden kann. Mit dem Zusammenschrauben von Stützmutter und Kupplungsmutter (9) kann somit die Verbindung zwischen einer Trennsäule (1) und einem Kapillarrohr hergestellt werden.

In Figur (2) sind schematisch verschiedene Formen von Anschlüssen ohne Darstellung der Endverschraubung schematisch gezeigt. In Figur (2a) ist die Trennsäule (1) allein zu sehen, d. h. ohne jede Vorsäule. In dieser Form ist die Trennsäule (1) dazu bestimmt, mit einem Kapillarrohr verbunden zu werden, wie zu Figur (1) beschrieben. Der Klipp (5) wird dann in die Ringnut (4) eingeschoben, welche den weitesten Abstand zum stirnseitigen Ende der Trennsäule (1) hat.

Figur (2b) stellt den Anschluß einer kleinen Vorsäule (13) dar. In diesem Fall wird der Klipp (5) in die mittlere Ringnut (3) eingeschoben, wobei der Abstand zwischen rechter Ringnut (4) und mittlerer Ringnut (3) so bemessen ist, daß für den Anschluß der kleinen Vorsäule (13) dieselbe, in Figur (1) dargestellte Kupplungmutter (9) verwendet werden kann, da die Stützmutter (6) um einen entsprechenden Betrag näher am Ende der Trennsäule (1) abgestützt wird.

Zwischen den stirnseitigen Enden der Trennsäule (1) und der kleinen Vorsäule (13) ist ein diskusförmiges Zwischenstück (14) vorgesehen, das beidseitig kegelstumpfförmige Vorsprünge (15, 16) aufweist. Die Vorsprünge sind so bemessen, daß sie in die stirnseitigen Öffnungen der Trennsäule (1) einerseits und der kleinen Vorsäule (13) andererseits einfassen. Das Zwischenstück (14) weist einen möglichst totvolumenarmen Durchgang für das zu analysierende Medium auf.

In Figur (2c) ist der Anschluß einer großen Vorsäule (17) - wieder unter Zwischenanordnung des Zwischenstückes (14) - dargestellt. In diesem Fall wird der Klipp (5) in die linke, dem Ende der Trennsäule (1) am nächsten liegende Ringnut (2) eingesetzt. Der Abstand dieser Ringnut (2) zu der rechten Ringnut (4) ist wiederum so bemessen, daß die Stützmutter derart nahe am Ende der Trennsäule (1) abgestützt wird, daß für das Aufpressen der großen Vorsäule (17) auf das Zwischenstück (14) bzw. die Trennsäule (1) dieselbe Kupplungsmutter (9), wie sie auch in den in Figur (2a) und Figur (2b) gezeigten Fällen verwendet wird, benutzt werden kann. In allen drei Fällen ist es also nicht notwendig, andere als die vorhandenen Teile der Endverschraubung heranzuziehen, d.h. es kann dieselbe Endverschraubung sowohl für den Anschluß eines Kapillarrohres als auch für das Ansetzen von Vorsäulen mit zwei unterschiedlichen Längen benutzt werden.

In Figur (3) ist die Verbindung der Trennsäule (1) mit einer weiteren Trennsäule (18) gezeigt. Auch die Trennsäule (18) hat im Endbereich drei Ringnuten (19, 20̸, 21), ist also insoweit gleich ausgebildet wie die Trennsäule (1). Ihre Länge kann der Trennsäule (1) entsprechen, aber auch davon abweichen.

In die jeweils von den Enden am weitesten beabstandeten Ringnuten (4, 21) sind Klipps (5, 22) der schon oben beschriebenen Art eingesetzt. An ihnen liegen zuvor auf die Trennsäulen (1, 18) aufgeschobene Stützmuttern (6, 23) ab, die gegeneinander gerichtet und gleich ausgebildet sind. Sie haben Griffteile (7, 24) und Außengewindeteile (8, 25), wobei letztere einander benachbart sind. An ihren äußeren Enden haben sie nach innen vorspringende Ringstege (26, 27), über die die Stützmuttern (6, 23) an den Klipps (5, 22) abgestützt werden. Die gegenüberliegenden Enden der Stützmuttern (6, 23) schließen in etwa bündig mit den stirnseitigen Enden der Trennsäulen (1, 18) ab. Zwischen den beiden Trennsäulen (1, 18) ist wieder das schon oben beschriebene, totvolumenarme Zwischenstück (14) angeordnet.

Damit die Trennsäulen (1, 18) gegeneinander gedrückt werden, ist auf die Außengewindeteile (8, 25) eine Kupplungshülse (29) aufgeschraubt, welche hierfür mit einem Innengewinde (30̸) versehen ist. Das Innengewinde (30̸) ist mit den Gewinden auf den Außengewindeteilen (8, 25) derart abgestimmt, daß die Stützmuttern (6, 23) durch Verdrehen der Kupplungshülse (29) in eine der beiden Richtungen aufeinanderzubewegt werden, also gegeneinander verfahren und dann bei Anlage der Trennsäulen (1, 18) an dem Zwischenstück (14) einen entsprechenden Druck ausüben. Zum Lösen der Verbindung wird die Kupplungshülse (29) dann in umgekehrter Richtung verdreht, so daß die Stützmuttern (6, 23) auseinanderbewegt werden.

## Patentansprüche

1. Chromatographiesäule mit einer Trennsäule (1, 18), die an wenigstens einer Seite mit einer Endverschraubung (8, 25) zum Anschluß eines Kapillarrohres, einer Vorsäule oder einer weiteren Trennsäule versehen ist, wobei die Endverschraubung eine das Säulenrohr umgebende Stützmutter und eine Kupplungsmutter (9) aufweist und sich die Stützmutter (6, 23) zum zugehörigen Ende der Trennsäule hin an einem Anschlagstück (5, 22) abstützt, welches in einer Ausnehmung an der Trennsäule gehalten ist,
dadurch gekennzeichnet, daß die Trennsäule (1, 18) wenigstens an einem Ende mehrere axial hintereinander angeordnete Ausnehmungen (2, 3, 4, 19, 20̸, 21) jeweils für die Aufnahme des Anschlagstückes (5, 22) aufweist.

2. Chromatographiesäule nach Anspruch 1,
dadurch gekennzeichnet, daß das Anschlagstück als C-förmiger Klipp (5, 22) ausgebildet ist.

3. Chromatographiesäule nach Anspruch 2,
dadurch gekennzeichnet, daß der Klipp (5, 22) und die Ausnehmungen (2, 3, 4, 19, 20̸, 21) derart aneinander angepaßt sind, daß der Klipp (5, 22) beim Einsetzen in eine der Ausnehmungen (2, 3, 4, 19, 20̸, 21) eine Einschnappbewegung ausführt.

4. Chromatographiesäule nach einem der Ansprüche 1 bis 3,
dadurch gekennzeichnet, daß die Ausnehmungen als Ringnuten (2, 3, 4, 19, 20̸, 21) ausgebildet sind.

5. Chromatographiesäule nach einem der Ansprüche 1 bis 4,
dadurch gekennzeichnet, daß die Kupplungsmutter (9) als Hutmutter ausgebildet ist.

6. Chromatographiesäule nach einem der Ansprüche 1 bis 4,
dadurch gekennzeichnet, daß die Kupplungsmutter als Kupplungshülse (29) zur Verbindung zweier Trennsäulen (1, 18) mit gegeneinander gerichteten Stützmuttern (6, 23) ausgebildet ist.

7. Chromatographiesäule nach einem der Ansprüche 1 bis 6,
dadurch gekennzeichnet, daß auf das offene Ende der Trennsäule (1, 18) ein totvolumenarmes Zwischenstück (14) aufgesetzt ist, das beidseitig Vorsprünge (15, 16) zum Einfassen in die Trennsäule (1, 18) und in ein anschließendes Element (13, 17, 18) aufweist.

8. Chromatographiesäule nach Anspruch 7,
dadurch gekennzeichnet, daß die Vorsprünge (15, 16) kegelstumpfförmig ausgebildet sind.

## Claims

1. Chromatography column having a separation column (1, 18) which is provided at at least one side with an end screwing connection (8, 25) for the connecting of a capillary tube or a preliminary column or a further separation column, the end screwing connection having a supporting nut surrounding the column tube, and a coupling nut (9), and the supporting nut (6, 23) bears in the direction towards the associated end of the separation column on an abutment element (5, 22) which is held in a recess on the separation column, characterised in that the separation column (1, 18) has at least at one end a plurality of recesses (2, 3, 4, 19, 20, 21) for each accommodating the abutment element (5, 22), these recesses being situated in axial succession to one another.

2. Chromatography column according to claim 1, characterised in that the abutment element is constructed as a C-shaped clip (5, 22).

3. Chromatography column according to claim 2, characterised in that the clip (5, 22) and the recesses (2, 3, 4, 19, 20, 21) are so adapted to one another that when a clip (5, 22) is inserted in one of the recesses (2, 3, 4, 19, 20, 21) the said clip makes a snapping-in movement.

4. Chromatography column according to one of claims 1 to 3, characterised in that the recesses are constructed as annular grooves (2, 3, 4, 19, 20, 21).

5. Chromatography column according to one of claims 1 to 4, characterised in that the coupling nut (9) is constructed as a cap nut.

6. Chromatography column according to one of claims 1 to 4, characterised in that the coupling nut is constructed as a coupling sleeve (29) for the connecting of two separation columns (1, 18) with supporting nuts (6, 23) directed towards one another.

7. Chromatography column according to one of claims 1 to 6, characterised in that on to the open end of the separation column (1, 18) there is placed an intermediate element (14) low in dead volumes, which element has at its two sides projections (15, 16) for engaging in the separation column (1, 18) and in an adjoining element (13, 17, 18).

8. Chromatography column according to claim 7, characterised in that the projections (15, 16) are constructed to have a frustoconical shape.

## Revendications

1. Colonne de chromatographie présentant une colonne de séparation (1, 18) munie, au moins d'un côté, d'une solidarisation filetée d'extrémité (8, 25) pour le raccordement d'un tube capillaire, d'une colonne d'amont ou d'une colonne supplémentaire de séparation, la solidarisation filetée d'extrémité comprenant un écrou d'accouplement (9) et un écrou de soutien entourant le tube de la colonne, et ledit écrou de soutien (6, 23) prenant appui, en direction de l'extrémité associée de la colonne de séparation, sur une pièce de butée (5, 22) retenue dans un évidement pratiqué dans la colonne de séparation,
caractérisée par le fait que la colonne de séparation (1, 18) comporte, au moins à une extrémité, plusieurs évidements (2, 3, 4, 19, 20, 21) agencés en succession axiale et respectivement affectés à la réception de la pièce de butée (5, 22).

2. Colonne de chromatographie selon la revendication 1,
caractérisée par le fait que la pièce de butée est réalisée sous la forme d'un clip (5, 22) configuré en C.

3. Colonne de chromatographie selon la revendication 2,
caractérisée par le fait que le clip (5, 22) et les évidements (2, 3, 4, 19, 20, 21) sont réciproquement adaptés de façon telle que le clip (5, 22) accomplisse un mouvement d'encastrement par déclic lors de l'insertion dans l'un des évidements (2, 3, 4, 19, 20, 21).

4. Colonne de chromatographie selon l'une des revendications 1 à 3,
caractérisée par le fait que les évidements sont réalisés sous la forme de saignées annulaires (2, 3, 4, 19, 20, 21).

5. Colonne de chromatographie selon l'une des revendications 1 à 4,
caractérisée par le fait que l'écrou d'accouplement (9) est réalisé sous la forme d'un capuchon taraudé.

6. Colonne de chromatographie selon l'une des revendications 1 à 4,
caractérisée par le fait que l'écrou d'accouplement est réalisé sous la forme d'une douille d'accouplement (29), en vue de relier deux colonnes de séparation (1, 18) munies d'écrous de soutien (6, 23) dirigés l'un vers l'autre.

7. Colonne de chromatographie selon l'une des revendications 1 à 6,
caractérisée par le fait qu'une pièce intercalaire (14) à faible volume perdu, mise en place sur l'extrémité ouverte de la colonne de séparation (1, 18), présente de part et d'autre des protubérances (15, 16) conçues pour s'enchâsser dans la colonne de séparation (1, 18) et dans un élément contigu (13, 17, 18).

8. Colonne de chromatographie selon la revendication 7,
caractérisée par le fait que les protubérances (15, 16) sont réalisées de configuration tronconique.
